# EUROPÄISCHE PATENTSCHRIFT

(11) **EP 3 199 815 B1**
(45) Veröffentlichungstag und Bekanntmachung des Hinweises auf die Patenterteilung: **15.07.2020**
(21) Anmeldenummer: 16152769.2
(22) Anmeldetag: 26.01.2016
(51) Int. Cl.: F04D 1/06, F04D 29/041, F04D 29/12, F16J 15/34

(54) **KREISELPUMPE**
CENTRIFUGAL PUMP
POMPE CENTRIFUGE

(43) Veröffentlichungstag der Anmeldung: 02.08.2017
(73) Patentinhaber: Grundfos Holding A/S, 8850 Bjerringbro (DK)
(72) Erfinder: Svarre, Erik Bundesen, 8850 Bjerringbro (DK); Nielsen, John Frigård, 8990 Fårup (DK)
(74) Vertreter: Patentanwälte Vollmann Hemmer Lindfeld Partnerschaft mbB

(56) Entgegenhaltungen:
- WO-A1-2014/187648
- NL-A- 7 712 699
- US-A- 1 927 543
- US-A- 4 700 953

## Beschreibung

Die Erfindung betrifft eine mehrstufige Kreiselpumpe mit den im Oberbegriff des Anspruchs 1 angegebenen Merkmalen.

Kreiselpumpen dieser Art zählen in unterschiedlichen Varianten zum Stand der Technik, es wird in diesem Zusammenhang auf Grundfos Pumpen der CR-Serie verwiesen. Diese Pumpen werden mit vertikal angeordneter Welle betrieben. Dabei sind die Pumpenstufen zwischen einem Fußteil und einem Kopfteil eingespannt und mit einem diese umgebenden Mantel versehen, der zusammen mit den übereinander angeordneten Leiteinrichtungen einen Ringkanal bildet, über welchen die vom Saugmund an der Unterseite des untersten Laufrades durch die Pumpenstufen nach oben geförderte Flüssigkeit zum Druckanschluss der Pumpe zurückgeführt wird. Eine die Kreiselräder tragende Welle durchsetzt den Kopfteil der Pumpe und ist dort mittels einer patronenartig eingegliederten Gleitringdichtung abgedichtet. Das dort am Pumpenkopf herausgeführte Wellenende ist mit dem Wellenende eines elektrischen Antriebsmotors drehfest verbunden, welcher über einen am Pumpenkopfteil angeordneten Motorstuhl befestigt ist.

Konstruktionsbedingt wirken auf die Pumpenwelle erhebliche Kräfte auch in axialer Richtung, die von dem Lagern der Pumpe bzw. des Motors aufgenommen werden müssen. Diese Kräfte sind im Wesentlichen hydraulisch bedingt. So wirken beispielsweise bei der Grundfos Pumpe CR90 bei einer Förderleistung von 120 m³ pro Stunde axial nach unten gerichtete Kräfte in der Größenordnung von 900 Newton, diese Kräfte sind von den Lagern des 45 KW-Motors aufzunehmen, wodurch eine Lagerbeanspruchung gegeben ist, die konstruktiv zu berücksichtigen ist oder einen erhöhten Lagerverschleiß mit sich bringt.

Die Erfindung geht von einem Stand der Technik aus, wie er aus US 1,927,543 bekannt ist. Die dort beschriebene Kreiselpumpe weist eine Gleitringdichtung zur Abdichtung der Durchführung der Welle durch eine Gehäuseöffnung auf, bei welcher die axialen Dichtflächen durch die Kraft einer Feder aufeinandergepresst werden, ähnlich wie dies bei der aus NL 7712699 bekannten Kreiselpumpe erfolgt.

Vor diesem Hintergrund liegt der Erfindung die Aufgabe zugrunde, eine gattungsgemäße mehrstufige Kreiselpumpe, insbesondere im Hinblick auf die Gleitringdichtungsanordnung zu verbessern.

Diese Aufgabe wird gemäß der Erfindung bei einer mehrstufigen Kreiselpumpe mit den in Anspruch 1 angegebenen Merkmalen gelöst. Vorteilhafte Ausgestaltungen der Erfindung ergeben sich aus den Unteransprüchen, der nachfolgenden Beschreibung und der Zeichnung.

Die erfindungsgemäße mehrstufige Kreiselpumpe weist eine Welle auf, auf der die Laufräder - auch Kreiselräder genannt - von Pumpenstufen sitzen und die drehbar innerhalb eines Pumpengehäuses angeordnet ist. Ein Ende dieser Welle ist zur Verbindung mit einem Antriebsmotor dichtend aus dem Pumpengehäuse herausgeführt. Innerhalb des Pumpengehäuses eine Kammer vorgesehen, die von der Welle durchsetzt ist und in der oder an der ein fest und dicht mit der Welle verbundener Wellenring angeordnet ist, dessen eine Seite zumindest abschnittsweise mit dem Druck der Pumpe (Ausgangsdruck) beaufschlagt ist. Es ist weiter eine Axialdichtung vorgesehen, deren rotierender Teil durch den Wellenring oder ein daran angeordnetes Dichtungsteil gebildet ist und deren nicht rotierender Teil durch einen Gegenring oder ein daran angeordnetes Dichtungsteil gebildet ist. Dabei ist der Gegenring radial gegenüber der Kammer abgedichtet und axial bewegbar innerhalb der Kammer geführt.

Hierdurch ist eine hydraulische Axialkraftentlastung der Welle geschaffen, um auf diese Weise die Axiallagerbelastung, sei es pumpenseitig und/oder motorseitig, zu verringern. Diese hydraulische Kraftkompensation wird mit einer Gleitringdichtung kombiniert, die dabei vorteilhaft so ausgelegt ist, dass die Gleitringdichtung selbst als reine Axialdichtung ausgelegt ist, wohingegen die erforderliche Radialdichtung nur zwischen einem nicht rotieren Teil der Axialdichtung und der Kammer, also einem Teil des Pumpengehäuses vorgesehen ist. Diese Radialdichtung muss lediglich die Axialbewegung des nicht rotierenden Teils der Axialdichtung aufnehmen, ist also dynamisch nur gering belastet, weshalb in der Regel ein O-Ring oder eine vergleichbare statische Dichtung ausreicht. Die eigentliche Wellenabdichtung zwischen der Kammer und der Umgebung erfolgt in an sich bekannter Weise, beispielsweise durch eine Dichtungskartusche mit eingegliederter Gleitring- oder auch anderer Dichtung, mit dem wesentlichen Vorteil, dass hier das Druckniveau nämlich die Differenz zwischen dem Druck in der Kammer einerseits und dem Umgebungsdruck andererseits vergleichsweise gering ist und insoweit eine kostengünstige Dichtung eingebaut werden kann, die bei nur geringer Reibung eine hohe Dichtheit gewährleistet.

Diese Lösung umfasst somit konstruktive Aspekte, welche hier in besonders vorteilhafter Weise zusammen wirken. Der Wellenring, der dicht und fest mit der Welle verbunden ist, ist zu einer Seite mit dem Druck der Pumpe, das heißt vorzugsweise mit dem Druck der letzten Pumpenstufe, beaufschlagt, also mit dem Ausgangsdruck der Pumpe, wodurch die gewünschte Kraftkompensation erzielt wird. Es versteht sich, dass der Wellenring flächenmäßig entsprechend auszulegen ist. Um die Fläche des Wellenrings druckwirksam zu gestalten, muss diese zu der anderen Seite des Wellenrings abgedichtet sein, was in vorteilhafter Weise durch eine axiale Gleitringdichtung erfolgt. Schließlich ist der nicht rotierende Teil der Axialgleitringdichtung in Achsrichtung beweglich an einer Kammerwand gelagert, wobei dieser Bereich durch eine konstruktiv einfache Dichtung, beispielsweise einen O-Ring abgedichtet werden kann, da diese Dichtung lediglich die geringfügige Axialbewegung aufnehmen muss, nicht jedoch die Bewegung zwischen rotierenden und nicht rotierenden Teilen. Schließlich wird durch die Kammer, welche innerhalb des Pumpengehäuses angeordnet ist und die vorteilhaft nach außen hin mit einer weiteren Dichtung zwischen Welle und Pumpengehäuse versehen und somit nach außen hin abgedichtet ist, ein abgeschlossener Raum geschaffen, welcher ein deutlich geringeres Druckniveau als der Druckraum aufweist. Die Kammer ist daher vorteilhaft nach außen nochmals abgedichtet, so dass Flüssigkeit, die insbesondere beim Anlaufen der Pumpe durch den sich noch nicht eingestellten Dichtspalt in diese Kammer eindringt, innerhalb der Pumpe abgeführt werden kann, ohne nach außen zu gelangen. Des Weiteren kann innerhalb der Kammer ein quasi beliebiges Druckniveau zwischen dem saugseitigen und dem druckseitigen Druck der Pumpe eingestellt werden, was zum einen die Dimensionierung des Wellenrings bzw. der druckwirksamen Fläche dieses Wellenrings entgegenkommt und zum anderen die Rückführung der in die Kammer gelangenden Flüssigkeit ermöglicht.

Gemäß einer vorteilhaften Weiterbildung der Erfindung ist die Kammer zu einer Seite der Axialdichtung mit einer Saugseite einer Pumpenstufe kanalverbunden. Es versteht sich, dass es sich hierbei um die Seite der Axialdichtung handelt, die nicht mit dem Ausgangsdruck der Pumpe beaufschlagt ist. Dabei hat es sich als besonders vorteilhaft erwiesen, wenn die Kammer mit der Saugseite der zweiten Pumpenstufe kanalverbunden wird. Dies hat den Vorteil, dass einerseits Leckagen zuverlässig verhindert werden können, da die Rückführung der in die Kammer gelangenden Flüssigkeit zuverlässig verhindert, dass diese durch die äußere Dichtung zwischen Welle und Pumpengehäuse gelangen kann. Darüber hinaus kann durch eine solche Kanalverbindung, insbesondere wenn sie mit dem Druckniveau zwischen zwei Pumpenstufen verbindet, die Kammer selbst mit einem gewissen Innendruck beaufschlagt werden, wodurch die Gleitringdichtung in gewissem Masse druckentlastet wird. Auch kann die Dimensionierung des Wellenringes und die dadurch bedingte hydraulische Gegenkraft auf die Welle in geeigneter Weise eingestellt werden. Die Dimensionierung von Wellenring und Gleitringdichtung sind somit nicht mehr ausschließlich abhängig vom Druck (Ausgangsdruck) der Pumpe.

Wenn der Wellenring innerhalb der Kammer angeordnet ist, dann wird der vorgenannte Effekt dadurch erreicht, dass die Kammer zu der anderen Seite des Wellenrings mit einer Saugseite einer Pumpenstufe kanalverbunden wird. In diesem Fall ist ein Teil der Kammer, nämlich der Teil zu einer Seite des Wellenrings, noch mit dem Pumpendruck (Ausgangsdruck) beaufschlagt.

Gemäß einer vorteilhaften Ausgestaltung der Erfindung ist die Axialdichtung an der den Laufrädern zugewandten Seite des Wellenrings angeordnet. Bei dieser Anordnung ist der Wellenring innerhalb der Kammer angeordnet und trennt die Druckniveaus innerhalb der Kammer. Bei dieser konstruktiven Ausgestaltung ist es vorteilhaft, wenn die Kammer einen zylindrischen Innenwandabschnitt aufweist, der zur Radialabdichtung des Gegenrings dient, also den Bereich bildet, in welchem der Gegenring axial bewegbar geführt ist. Dann ist die Kammer an einer Seite mit dem Druckraum der letzten Pumpenstufe hydraulisch verbunden, an der anderen Seite weist sie eine Wellendurchführung nach außerhalb des Pumpengehäuses auf, die ebenfalls abgedichtet ausgebildet ist.

Die Wellendurchführung nach außerhalb des Pumpengehäuses, also im Bereich von der Kammer nach außen, ist vorteilhaft durch eine Dichtungseinheit abgedichtet, die vorzugsweise als Gleitringdichtungskartusche ausgebildet ist und in einer Stirnwand der Kammer eingegliedert ist. Es kann sich dabei um eine Dichtungseinheit handeln, ähnlich wie sie beim Stand der Technik eingesetzt wird, die von außen austauschbar ist, also ohne die Welle aus der Pumpe entfernen zu müssen. Da das Druckniveau zwischen Kammer und Umgebung deutlich geringer als das Druckniveau zwischen dem Druck der letzten Pumpenstufe, also dem Ausgangsdruck der Pumpe und der Kammer ist, kann diese Dichtung einfacher dimensioniert sein.

Die Kreiselpumpe selbst ist vorteilhaft so ausgebildet, dass das Pumpengehäuse ein Kopfteil und ein Fußteil aufweist, zwischen denen die Pumpenstufen eingespannt sind, wobei die Kammer vorteilhaft im Kopfteil angeordnet ist, wo auch die Wellendurchführung nach außen liegt. Bei der Kreiselpumpe handelt es sich vorteilhaft um eine mit vertikaler Welle betriebene Inline-Pumpe, deren Saug- und Druckanschluss fußteilseitig angeordnet sind und bei der ein die Pumpenstufen umgebender Ringkanal gebildet ist, welche die Förderflüssigkeit von einem Druckraum am Ausgang der letzten Pumpenstufe vom Kopfteil zurück in den Fußteil zum Druckanschluss führt. Dabei ist die Kammer mit ihrer einen Seite an den Druckraum der letzten Pumpenstufe angrenzend angeordnet.

Gemäß einer vorteilhaften Weiterbildung der Erfindung kann der Wellenring selbst Teil der Axialdichtung bilden, wenn er an einer Axialseite eine Ringfläche aufweist, welche eine rotierende Dichtfläche der Axialdichtung bildet. Alternativ kann der Wellenring mit einem Axialdichtring versehen sein, dessen eine Stirnseite eine rotierende Dichtfläche der Axialdichtung bildet. Ein solcher Axialdichtring ist vorteilhaft auswechselbar, beispielsweise in einer Nut in der Stirnseite des Wellenrings eingegliedert. Diese Ausgestaltung hat den Vorteil, dass nur der Axialdichtring selbst aus hoch verschleißfesten Material, beispielsweise Siliciumcarbid, gefertigt werden kann, wohingegen der volumenmäßig deutlich größere Wellenring aus einem kostengünstigeren Werkstoff bestehen kann. Entsprechend kann der Gegenring so ausgebildet sein, dass er entweder selbst eine Axialseite aufweist, die eine nicht rotierende Dichtfläche der Axialdichtung bildet oder mit einem vorzugsweise auswechselbaren Axialdichtring versehen ist, dessen eine Stirnseite eine nicht rotierende Dichtfläche der Axialdichtung bildet.

Die Radialdichtung zwischen Gegenring und Kammer kann vorteilhaft durch einen O-Ring gebildet sein, der kostengünstig ist und einfach montiert werden kann. Vorteilhaft liegt der O-Ring in einer Nut der Kammerwandung, es kann jedoch auch eine umlaufende Nut im Außenumfang des Gegenrings vorgesehen sein, um den O-Ring in seiner Position zu halten.

In der Axialdichtung entsteht insbesondere beim Anlaufen, wenn sich noch kein quasi stationärer Zustand eingestellt hat, eine höhere Reibung. Um hier zu verhindern, dass der nicht rotierende Teil der Dichtung in Drehung versetzt wird, ist gemäß der Erfindung eine Verdrehsicherung vorgesehen, und zwar zwischen Gegenring und Kammer. Eine solche Verdrehsicherung ist gemäß der Erfindung durch einen Blechabschnitt gebildet, der formschlüssig drehfest mit der Kammerwandung und mit dem Gegenring verbunden ist, jedoch axial verschiebbar innerhalb der Kammer angeordnet ist, so dass er den Axialbewegungen des Gegenrings folgen kann.

Gemäß der Erfindung ist der Blechabschnitt ringförmig ausgebildet, so dass er in seinem äußeren Bereich in einer Stirnseite oder einem Absatz im Gegenring anliegt und an seiner Innenseite die Welle mit geringem Abstand umgibt. Dabei ist die Dimensionierung des Spaltes bzw. sonstiger Öffnungen zwischen dem Blechabschnitt und der Welle bzw. dem Gegenring so gewählt, dass beim Anlaufen der Pumpe, also beim Druckaufbau zunächst der Blechabschnitt und damit der daran anliegende Gegenring durch Druckbeaufschlagung axial verschoben wird, bis die Dichtflächen der Axialdichtung aneinander anliegen. Im Übrigen ist der Gegenring so gestaltet, dass stets, das heißt auch bei Anliegen der Axialdichtflächen aneinander aufgrund des einseitig anstehenden höheren Druckes eine axiale Kraft erzeugt wird, welche den Gegenring zum Wellenring hin kraftbeaufschlagt.

Die Erfindung ist nachfolgend anhand von Ausführungsbeispielen näher erläutert. Es zeigen:
- Fig. 1: in stark vereinfachter Längsschnittdarstellung eine mehrstufige Kreiselpumpe gemäß der Erfindung mit angeschlossenem Elektromotor,
- Fig. 2: die Einzelheit II in Fig. 1 in vergrößerter Darstellung,
- Fig. 3: die Einzelheit III der Fig. 2 in vergrößerter Darstellung,
- Fig. 4: eine Explosionsdarstellung des Kopfteils der Pumpe mit Dichtungen, und
- Fig. 5: eine weitere, nicht zur Erfindung gehörige Ausführungsform in Darstellung nach Fig. 3.

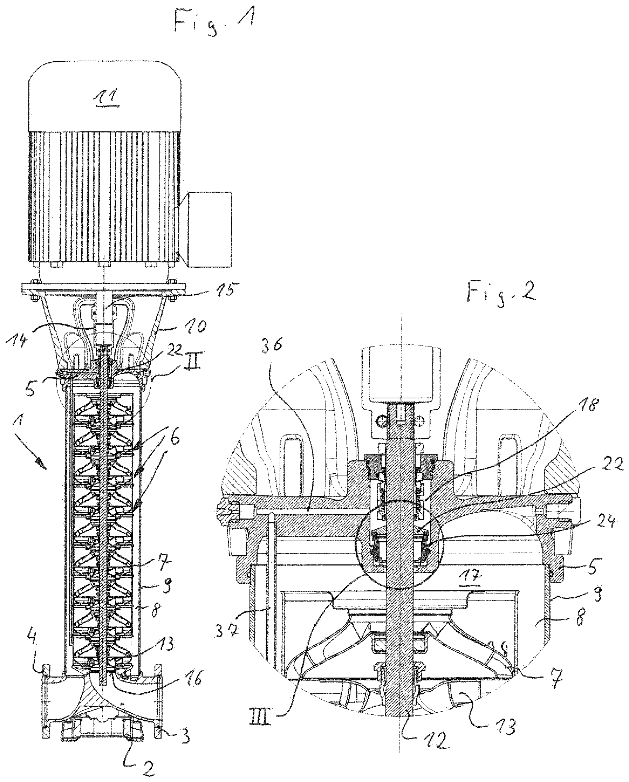

Bei der in Fig. 1 dargestellten Kreiselpumpe handelt es sich um eine mehrstufige Inline-Kreiselpumpe 1, mit einem Fußteil 2, auf dem die Pumpe steht und welcher einen Sauganschluss 3 sowie einen achsgleich dazu liegenden Druckanschluss 4 aufweist. Nach oben abgeschlossen wird die Kreiselpumpe 1 durch einen Kopfteil 5. Zwischen Kopfteil 5 und Fußteil 2 sind die Pumpenstufen 6 angeordnet, deren Leitapparate 7 die Innenwand eines Ringkanals 8 bilden, dessen Außenwand durch einen Rohrabschnitt 9 gebildet ist, der ebenfalls zwischen Kopfteil 5 und Fußteil 2 eingespannt ist. Kopfteil und Fußteil sind durch hier nicht dargestellte Zuganker miteinander verbunden. An das Kopfteil 5 schließt nach oben ein Motorstuhl 10 an, welcher einen Antriebsmotor in Form eines Elektromotors 11 trägt.

Die Kreiselpumpe 1 weist eine zentrale Welle 12 auf, die aufrecht stehend, das heißt vertikal angeordnet ist und welche Kreiselräder 13 der einzelnen Pumpenstufen 6 trägt. Die Welle 12 ist durch den Kopfteil 5 der Pumpe 1 dichtend hindurchgeführt und im Bereich des Motorstuhls 10 über eine Kupplung 14 drehfest mit einer Welle 15 des Motors 11 gekuppelt.

Im Betrieb gelangt die Förderflüssigkeit durch den Sauganschluss 3 zum Saugmund 16 der ersten Pumpenstufe 6 und von dort von Stufe 6 zu Stufe 6 unter Druckerhöhung nach oben, bis zum Austritt an der letzten Pumpenstufe, also in den Druckraum 17. Von dort gelangt die Flüssigkeit über den Ringkanal 8 wieder in den Fußteil 2 und dort zum Druckanschluss 4, wo die Förderflüssigkeit austritt.

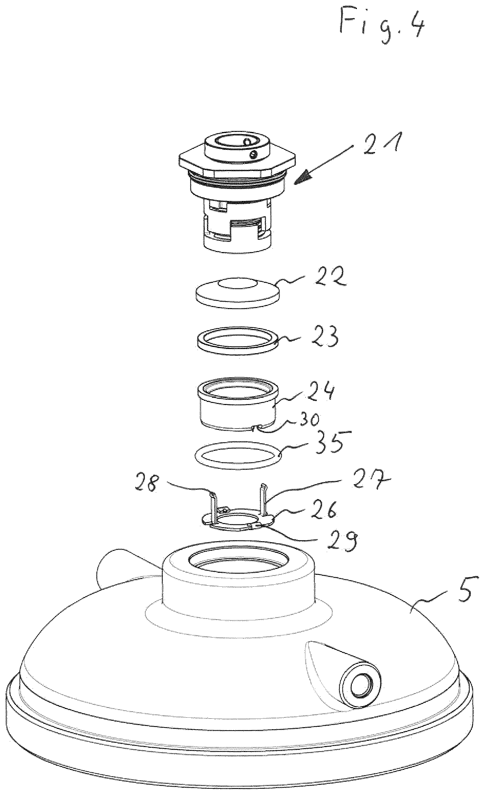

Im Kopfteil 5 ist eine Kammer 18 vorgesehen, die von der Pumpenwelle 12 durchsetzt ist, wobei bei der Ausführung gemäß den Fig. 1 bis 4 der untere Teil der Kammer 18 mit dem Druckraum 17 kanalverbunden und über eine Dichtung bestehend aus einer Axialdichtung 19 und einer Radialdichtung 20 von der übrigen Kammer 18 getrennt ist. Eine weitere Dichtung 21 dichtet die Kammer nach oben im Bereich zwischen dem Austritt der Welle 12 aus dem Kopfteil 5 des Pumpengehäuses gegenüber dem Pumpengehäuse ab. Bei dieser Dichtung 21 handelt es sich um eine Dichtungseinheit wie sie zum Stand der Technik zählt und auch bei Grundfos-CR-Pumpen Verwendung findet, auf die insoweit verwiesen wird.

Auf der Welle 12 ist dicht und fest im unteren Bereich der Kammer 18 ein Wellenring 22 angeordnet. Dieser Wellenring 22 ist durch Kleben, Schweißen oder Schrumpfen fest und dicht mit der Welle 12 der Pumpe 1 verbunden. In dem Wellenring 22 ist in der zu den Laufrädern 13 weisenden Flachseite eine umlaufende Nut eingelassen, in welcher ein aus Siliciumcarbid bestehender Dichtring 23 angeordnet ist. Dieser Dichtring 23 bildet den rotierenden Dichtungsteil der Axialdichtung 19. Der nicht rotierende Dichtungsteil wird durch einen Gegenring 24 gebildet, der eine im Wesentlichen zylindrische Form aufweist und dessen zum Wellenring 22 gerichtete Stirnseite die Gegendichtfläche 25 bildet, die im Betrieb am Dichtring 23 dichtend anliegt und zusammen mit diesem die Axialdichtung 19 bildet. Der Gegenring 24 ist nach unten offen ausgebildet und an seiner Unterseite mit einem aus Blech gebildeten Ring 26 versehen, der zwei diametral gegenüberliegende und aus der Grundfläche des Rings nach oben hervorspringende Arme 27 aufweist. Diese Arme greifen mit ihren radial nach außen vorspringenden Enden 28 in einen nach außen erweiterten Absatz der zylindrischen Innenseite des Gegenrings 24 und bilden eine Befestigung. Jeweils um 90° versetzt zu den Armen 27 sind Erhöhungen 29 an der Oberseite ausgebildet, die in entsprechende Ausnehmungen 30 an der unteren Stirnseite des Gegenrings 24 eingreifen und somit den Blechring 26 drehfest zum Gegenring 24 sichern. Gegenüber dem Pumpengehäuse liegt der Blechring 26 drehfest in entsprechenden Vorsprüngen 31 am Boden der Kammer 18. Der Blechring 26 schließt den zwischen dem Gegenring 24 und der Welle 12 gebildeten Freiraum Großteils ab, was zur Folge hat, dass beim Anlauf der Pumpe die mit hohem Druck im Druckraum 17 anstehende Förderflüssigkeit durch den Spalt 32 zwischen dem Kammerboden und der Welle 12 gelangt und am Blechring 26 zunächst einmal ansteht. Da der Spalt zwischen dem Blechring 26 und der Welle 12 wesentlich kleiner als der Spalt 32 ist, sorgt der am Ring 26 anstehende Druck dafür, dass dieser den Gegenring 24 axial verschiebt, bis dieser am Dichtring 23 anliegt. Erst dann kann sich auch innerhalb des Gegenrings 24, also in dem Raum zwischen dem Gegenring 24 und der Welle 12, langsam ein Druck aufbauen. In stationären druckausgeglichenem Betriebszustand ist die axial druckwirksame Innenfläche des Gegenrings kleiner als die Außenfläche, an welcher der Ausgangsdruck des Druckraums 17 ansteht, so dass der Gegenring zum Wellenring 22 in axialer Richtung kraftbeaufschlagt und somit in seiner dichtenden Position hydraulisch gehalten ist.

Der Gegenring 24 ist nicht rotierend und wird durch die Vorsprünge 31 in Verbindung mit dem Blechring 26 drehfest zum Pumpengehäuse gehalten. Er ist axial verschiebbar innerhalb der Kammer 18 gelagert, hierzu weist die Kammer einen zylindrischen Abschnitt 33 auf, in dem eine umlaufende Nut 34 vorgesehen ist, in welcher ein O-Ring 35 eingegliedert ist, der die Kammerwand gegenüber dem Gegenring 24 abdichtet. Da sich der Gegenring 24 nur anfänglich axial bewegt, im Übrigen aber bezogen auf die Kammer 18 quasi stationär angeordnet ist, reicht diese Radialdichtung 25 (O-Ring Dichtung) aus, um den im Druckraum 17 herrschenden Druck gegenüber der Kammer 18 abzudichten.

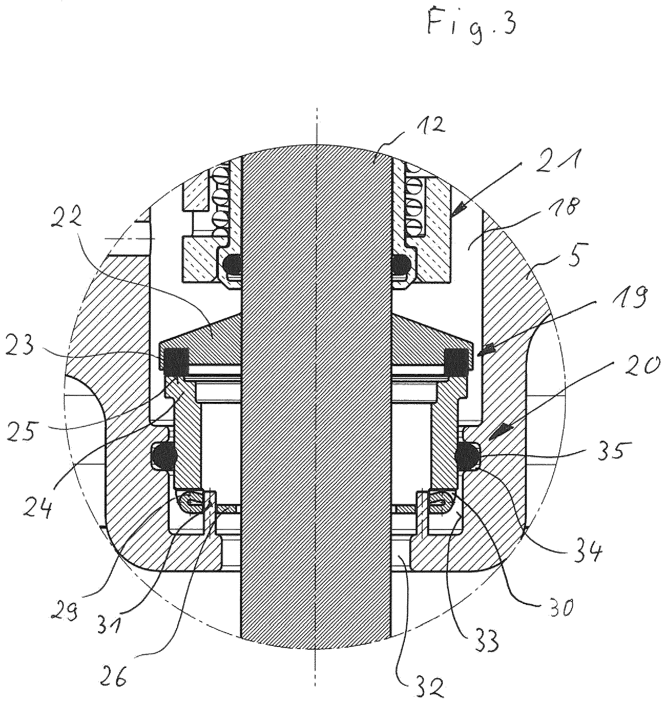

Wie insbesondere aus Fig. 3 ersichtlich ist, weist der Wellenring 22 eine Ringfläche zwischen dem Dichtring 23 und der Welle 22 auf, die so dimensioniert ist, dass die dort entstehende Druckkraft zumindest teilweise die auf die Welle 12 im Betrieb wirkende Kraft nach unten kompensiert.

Die Kammer 18 ist durch die Dichtungen 19 und 20 zum Druckraum 17 hin und durch die Dichtungseinheit 21 nach außen hin abgedichtet. Um die möglicherweise in die Kammer 18 jenseits der Dichtungen 19 und 20 gelangende Flüssigkeit abzuführen, ist ein Kanal 36 vorgesehen, der sich zunächst von der Kammer 18 radial nach außen durch den Kopfteil 5 erstreckt und endseitig dicht verschlossen ist. Quer zu diesem Kanal 36 schließt ein Rohr 37 an, welches den Kanal 36 mit dem Ausgang der ersten Pumpenstufe 6 verbindet, so dass die über den Kanal 36 und das Rohr 37 rückgeführte Flüssigkeit wieder in den Förderweg geführt wird. Da die Verbindung zwischen der ersten und der zweiten Pumpenstufe mündet, ist die Kammer 18 stets mit dem Druckniveau am Ausgang der ersten Pumpenstufe 6 beauf-schlagt, also einem Druck der deutlich geringer als der im Druckraum 17 am Ende der letzten Pumpenstufe 6 anstehende Druck ist, jedoch höher als der Umgebungsdruck. Der in der Kammer 18 anstehende Druck kann konstruktiv quasi beliebig eingestellt werden, je nach dem Ort der Mündung des Rohrs 37. Dadurch ergibt sich der am Wellenring 22 im Betrieb anstehende Differenzdruck und damit auch die durch den Wellenring hydraulisch erzeugte Kompensationskraft.

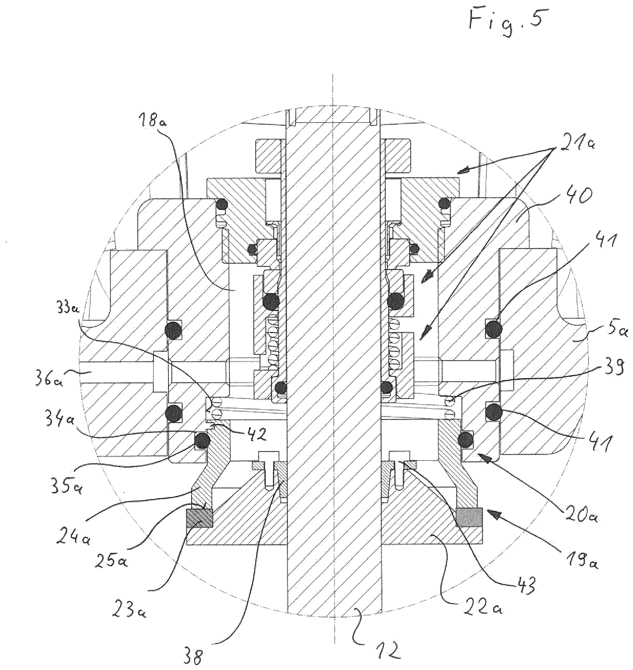

Anhand von Fig. 5 ist eine nicht zur Erfindung gehörige Ausführungsvariante dargestellt, die von der Darstellung der Fig. 2 entspricht, bei der jedoch der Wellenring 22a nicht innerhalb der Kammer 18a, sondern an der Kammer 18a angeordnet ist, quasi die bodenseitige Kammerwand bildet. Die in Fig. 5 funktionsgleichen Bauteile zu der vorbeschriebenen Ausführungs-form sind mit gleichen Bezugsziffern, jedoch mit dem Zusatz "a" gekennzeichnet.

Der Wellenring 22a ist mittels eines konischen Klemmrings 38 auf der Welle 12 befestigt, dieser Klemmring 38 ist über Schrauben 43 in einer entsprechend konischen Ausnehmung an der Innenseite des Wellenrings 22a eingepresst und hält den Wellenring 22a dicht und fest auf der Welle 12. Anders als bei der vorstehend beschriebenen Ausführungsform weist der Wellenring 22a einen Dichtring 23a auf, der auf der von den Kreiselrädern 13 abgewandten Seite des Wellenrings 22a angeordnet ist. Ein Gegenring 24a liegt mit seiner nach unten weisenden Gegendichtfläche 25a dichtend an dem Dichtring 23a an.

Der Gegenring 24a ist axial bewegbar in einen zylindrischen Abschnitt 33a der Kammer 18a geführt und über einen in einer Nut 34a liegenden O-Ring 35a radial abgedichtet. Der O-Ring 35a bildet die Radialdichtung 20a, wohingegen der Dichtring 23a und der Gegenring 24a mit der Gegendichtfläche 25a die Axialdichtung 19a bilden. Da bei dieser Ausführungsvariante die Kammer 18a durch den Wellenring 22a und den Gegenring 24a nach unten abgeschlossen werden, steht der Druck des Druckraums 17 nur außen am Wellenring 22a und am Gegenring 24a an, die Kammer 18a weist überall das gleiche Druckniveau auf, welches durch die Verbindung über die Kanäle 36a und 37 (37 in Fig. 5 nicht sichtbar) bestimmt ist. Da der Gegenring 24a hier nicht mit dem Druck des Druckraums 17 beaufschlagt ist, ist zur Erzeugung der erforderlichen axialen Anpresskraft des Gegenrings 24 mit seiner Gegendichtfläche 25a eine Schraubenfeder 39 vorgesehen, die sich an einem nach innen vorspringenden Absatz in der Kammerwandung abstützt. Die Kammerwandung ist radial hier nicht unmittelbar durch den Kopfteil 5 gebildet sondern durch eine dort eingegliederte Hülse 40, die in einer Ausnehmung des Kopfteils 5 schraubbefestigt und mittels zweier O-Ringe 41 gegenüber dem Kanal 36 bzw. den entsprechenden Durchbrüchen in der Hülse 40 abgedichtet ist. Auch bei dieser Ausführungsform ist eine Verdrehsicherung 42 vorgesehen, welche dafür sorgt, dass der Gegenring 24a drehfest innerhalb der Hülse 40 angeordnet ist.

### Bezugszeichenliste

- 1: Kreiselpumpe
- 2: der Fußteil
- 3: Sauganschluss
- 4: Druckanschluss
- 5: der Kopfteil
- 6: Pumpenstufen
- 7: Leitapparat
- 8: Ringkanal
- 9: Rohrabschnitt
- 10: Motorstuhl
- 11: Elektromotor
- 12: Welle der Pumpe
- 13: Kreiselräder/Laufräder
- 14: Kupplung
- 15: Welle des Motors
- 16: Saugmund der ersten Pumpenstufe
- 17: Druckraum
- 18,18a: Kammer
- 19, 19a: Axialdichtung
- 20, 20a: Radialdichtung
- 21, 21a: Dichtungseinheit
- 22, 22a: Wellenring
- 23, 23a: Dichtring
- 24, 24a: Gegenring
- 25, 25a: Gegendichtfläche
- 26: Blechring
- 27: Arme
- 28: Enden der Arme
- 29: Erhöhungen
- 30: Ausnehmungen
- 31: Vorsprünge
- 32: Spalt
- 33, 33a: zylindrischer Abschnitt von 18
- 34, 34a: Nut
- 35, 35a: O-Ring
- 36, 36a: Kanal
- 37: Rohr
- 38: Klemmring
- 39: Schrauben
- 40: Hülse
- 41: O-Ringe
- 42: Verdrehsicherung
- 43: Schrauben

## Patentansprüche

1. Mehrstufige Kreiselpumpe, bei der Laufräder (13) von Pumpenstufen (6) auf einer Welle (12) angeordnet sind, die drehbar innerhalb eines Pumpengehäuses angeordnet und an einem Ende zur Verbindung mit einem Antriebsmotor (11) dichtend aus dem Pumpengehäuse herausgeführt ist, wobei innerhalb des Pumpengehäuses eine Kammer (18) vorgesehen ist, die von der Welle (12) durchsetzt ist, und in oder an der ein fest und dicht mit der Welle (12) verbundener Wellenring (22) angeordnet ist, dessen eine Seite zumindest abschnittsweise mit dem Druck der Pumpe beaufschlagt ist, wobei eine Axialdichtung (19) vorgesehen ist, deren rotierender Teil durch den Wellenring (22) oder ein daran angeordnetes Dichtungsteil (23) gebildet ist und deren nicht rotierender Teil durch einen Gegenring (24) oder ein daran angeordnetes Dichtungsteil gebildet ist, und wobei der Gegenring (24) radial gegenüber der Kammer (18) abgedichtet und axial bewegbar innerhalb der Kammer (18) geführt ist, **dadurch gekennzeichnet, dass** eine Verdrehsicherung zwischen dem Gegenring (24) und der Kammer (18) vorgesehen ist, die einen ringförmigen Blechabschnitt (26) aufweist, der formschlüssig drehfest mit der Kammerwandung und mit dem Gegenring (24) verbunden ist, jedoch axial verschiebbar in der Kammer (18) angeordnet ist und der so ausgebildet ist, dass er in seinem äußeren Bereich in einer Stirnseite oder einem Absatz im Gegenring (24) anliegt und an seiner Innenseite die Welle (12) mit geringem Abstand umgibt, wobei die Dimensionierung des Spaltes bzw. sonstiger Öffnungen zwischen dem Blechabschnitt (26) und der Welle (12) bzw. dem Gegenring (24) so gewählt ist, dass beim Anlaufen der Pumpe, also beim Druckaufbau zunächst der Blechabschnitt (26) und damit der daran anliegende Gegenring (24) durch Druckbeaufschlagung axial verschoben wird, bis die Dichtflächen der Axialdichtung (19) aneinander anliegen.

2. Kreiselpumpe nach Anspruch 1, **dadurch gekennzeichnet, dass** die Kammer (18) zu einer Seite der Axialdichtung (19) mit einer Saugseite einer Pumpenstufe (6), vorzugsweise der zweiten Pumpenstufe (6) kanalverbunden ist.

3. Kreiselpumpe nach Anspruch 1 oder 2, **dadurch gekennzeichnet, dass** die Kammer (18) zu der anderen Seite des Wellenrings (22) mit einer Saugseite einer Pumpenstufe (6), vorzugsweise der zweiten Pumpenstufe (6) kanalverbunden ist.

4. Kreiselpumpe nach einem der vorhergehenden Ansprüche, **dadurch gekennzeichnet, dass** die Axialdichtung (19) an der den Laufrädern (13) zugewandten Seite des Wellenrings (22) angeordnet ist.

5. Kreiselpumpe nach einem der vorhergehenden Ansprüche, **dadurch gekennzeichnet, dass** die Kammer (18) einen zylindrischen Innenwandabschnitt (33) zur Radialabdichtung aufweist, an einer Seite mit dem Druckraum (17) der letzen Pumpenstufe (6) hydraulisch verbunden ist und an der anderen Seite eine Wellendurchführung nach außerhalb des Pumpengehäuses aufweist.

6. Kreiselpumpe nach Anspruch 5, **dadurch gekennzeichnet, dass** die Wellendurchführung nach außerhalb des Pumpengehäuses eine Dichtungseinheit (21), vorzugsweise eine Gleitringdichtungseinheit (21) aufweist, die in einer Stirnwand der Kammer (18) eingegliedert ist.

7. Kreiselpumpe nach einem der vorhergehenden Ansprüche, **dadurch gekennzeichnet, dass** das Pumpengehäuse ein Kopfteil (5) und ein Fußteil (2) aufweist, zwischen denen die Pumpenstufen (6) eingespannt sind und dass die Kammer (18) im Kopfteil (5) angeordnet ist.

8. Kreiselpumpe nach Anspruch 7, **dadurch gekennzeichnet, dass** es sich um eine vorzugsweise mit vertikaler Welle (12) betriebene Inline-Pumpe handelt, deren Saug-und Druckanschluss (3, 4) fußteilseitig angeordnet sind und bei der ein die Pumpenstufen (6) umgebender Ringkanal (8) gebildet ist, welcher die Förderflüssigkeit von einem Druckraum (17) am Ausgang der letzten Pumpenstufe (6) vom Kopfteil (5) in den Fußteil (2) zum Druckanschluss (4) rückführt, wobei die Kammer (18) mit ihrer einen Seite an den Druckraum (17) angrenzt.

9. Kreiselpumpe nach einem der vorhergehenden Ansprüche, **dadurch gekennzeichnet, dass** der Wellenring (22) an einer Axialseite eine Ringfläche aufweist, welche eine rotierende Dichtfläche der Axialdichtung (19) bildet.

10. Kreiselpumpe nach einem der vorhergehenden Ansprüche, **dadurch gekennzeichnet, dass** der Wellenring (22) mit einem vorzugsweise auswechselbaren Axialdichtring (23) versehen ist, dessen eine Stirnseite eine rotierende Dichtfläche der Axialdichtung (19) bildet.

11. Kreiselpumpe nach einem der vorhergehenden Ansprüche, **dadurch gekennzeichnet, dass** der Gegenring (24) eine Axialseite aufweist, die eine nicht rotierende Dichtfläche (25) der Axialdichtung (19) bildet.

12. Kreiselpumpe nach einem der vorhergehenden Ansprüche, **dadurch gekennzeichnet, dass** der Gegenring (24) mit einem vorzugsweise auswechselbaren Axialdichtring versehen ist, dessen eine Stirnseite eine nicht rotierende Dichtfläche der Axialdichtung (19) bildet.

13. Kreiselpumpe nach einem der vorhergehenden Ansprüche, **dadurch gekennzeichnet, dass** zwischen Gegenring (24) und Kammer (18) ein O-Ring (35) eingegliedert ist, vorzugsweise in einer umlaufenden Nut (34) in der Kammerwandung.

## Claims

1. A multi-stage centrifugal pump, with which impellers (13) of pump stages (6) are arranged on a shaft (12) which is rotatably arranged within a pump casing and at one end is sealingly led out of the pump casing for connection to a drive motor (11), wherein a chamber (18), through which the shaft (12) passes is provided within the pump casing, and a shaft ring (22) which is fixedly and sealingly connected to the shaft (12) and whose one side at least in sections is subjected to the pressure of the pump is arranged in or on said shaft, wherein an axial seal (19) is provided, whose rotating part is formed by a shaft ring (22) or a seal part (23) arranged thereon, and whose non-rotating part is formed by a counter-ring (24) or a seal part which is arranged thereon, and wherein the counter-ring (24) is radially sealed with respect to the chamber (18) and is axially movably guided within the chamber (18), **characterised in that** a rotation lock (42) is provided between the counter-ring (24) and the chamber (18), said rotation lock comprising an annular sheet metal section (26) which is positively connected to the chamber wall and to the counter-ring (24) in a rotationally fixed manner, but is axially displaceably arranged in the chamber (18) and is designed such that in its outer region it bears in a face side or a shoulder in the counter-ring (24) and at its inner side surrounds the shaft (12) at a small distance, wherein the dimensioning of the gap or other openings between the sheet-metal section (26) and the shaft (12) or the counter-ring (24) is selected such that on running up the pump, thus given a pressure build-up, firstly the sheet-metal section and thus the counter-ring (24) which bears thereon is displaced axially due to the pressure impingement, until the sealing surfaces of the axial seal bear (19) on one another.

2. A centrifugal pump according to claim 1, **characterised in that** the chamber (18) to one side of the axial seal (19) is channel-connected to a suction side of a pump stage (6), preferably of the second pump stage (6).

3. A centrifugal pump according to claim 1 or 2, **characterised in that** the chamber (18) to the other side of the shaft ring (22) is channel-connected to a suction side of a pump stage (6), preferably of the second pump stage (6).

4. A centrifugal pump according to one of the preceding claims, **characterised in that** the axial seal (19) is arranged on the side of the shaft ring (22) which faces the impellers (13).

5. A centrifugal pump according to one of the preceding claims, **characterised in that** the chamber (18) comprises a cylindrical inner wall section (33) for the radial sealing, at one side is hydraulically connected to the delivery chamber (17) of the last pump stage (6) and at the other side comprises a shaft feed-through to outside the pump casing.

6. A centrifugal pump according to claim 5, **characterised in that** the shaft feed-through to outside the pump casing comprises a sealing unit (21), preferably a mechanical shaft seal unit (21) which is integrated into a face wall of the chamber (18).

7. A centrifugal pump according to one of the preceding claims, **characterised in that** the pump casing comprises a head part (5) and a foot part (2), between which the pump stages (6) are clamped and that the chamber (18) is arranged in the head part (5).

8. A centrifugal pump according to claim 7, **characterised in that** it is the case of an inline pump which is preferably operated with a vertical shaft (12) and whose suction and delivery connection (3, 4) are arranged on the foot part side and with which an annular channel (8) is formed, said annular channel surrounding the pump stages (8) and leading back the delivery fluid from a delivery chamber (17) at the exit of the last pump stage (6), from the head part (5) back into the foot part (2) to the delivery connection (4), wherein the chamber (18) with its one side is adjacent to the delivery chamber (17).

9. A centrifugal pump according to one of the preceding claims, **characterised in that** the shaft ring (22) at an axial side comprises an annular surface which forms a rotating sealing surface of the axial seal (19).

10. A centrifugal pump according to one of the preceding claims, **characterised in that** the shaft ring (22) is provided with a preferably exchangeable axial sealing ring (23) whose one face side forms a rotating sealing surface of the axial seal (19).

11. A centrifugal pump according to one of the preceding claims, **characterised in that** the counter-ring (24) comprises an axial side which forms a non-rotating sealing surface (25) of the axial seal (19).

12. A centrifugal pump according to one of the preceding claims, **characterised in that** the counter-ring (24) is provided with a preferably exchangeable axial sealing ring, whose one face side forms a non-rotating sealing surface of the axial seal (19).

13. A centrifugal pump according to one of the preceding claims, **characterised in that** an O-ring (35) is integrated between the counter-ring (24) and the chamber (18), preferably in a peripheral groove (34) in the chamber wall.

## Revendications

1. Pompe centrifuge à plusieurs étages dans laquelle des turbines (13) d'étages de pompe (6) sont disposées sur un arbre (12) qui est disposé de façon rotative à l'intérieur d'un carter de pompe et qui est sorti de façon étanche du carter de pompe à une extrémité en vue d'être connecté à un moteur d'entraînement (11), une chambre (18) étant prévue à l'intérieur du carter de pompe qui est traversée par l'arbre (12) et dans laquelle ou sur laquelle une bague d'arbre (22) est disposée qui est attachée de manière ferme et étanche à l'arbre (12) et dont un côté est susceptible, au moins par segment, d'être soumis à la pression de la pompe, un joint d'étanchéité axial (19) étant prévu dont la partie rotative est constituée par la bague d'arbre (22) ou une partie de joint (23) disposée sur celle-ci et dont la partie non rotative est constituée par une contre-bague (24) ou une partie de joint disposée sur celle-ci, et la contre-bague (24) étant montée radialement étanche par rapport à la chambre (18) et axialement mobile à l'intérieur de la chambre (18),
**caractérisée en ce qu'**il est prévu un dispositif anti-rotation entre la contre-bague (24) et la chambre (18), qui comprend une partie annulaire (26) en tôle qui est attachée de façon solidaire en rotation par complémentarité de forme à la paroi de la chambre et à la contre-bague (24) mais qui est disposée de façon axialement coulissante dans la chambre (18) et qui est formée de façon que, par sa zone extérieure, elle soit adjacente à une face frontale ou un étagement dans la contre-bague (24) et qu'elle entoure, sur sa face intérieure, l'arbre (12) à une faible distance, les dimensions de la fente ou d'autres ouvertures entre la partie en tôle (26) et l'arbre (12) ou la contre-bague (24) étant choisies de façon que, lors du démarrage de la pompe, c'est-à-dire lors de la constitution de la pression, ce soit d'abord la partie de tôle (26) et ainsi la contre-bague adjacente qui est déplacée axialement par la pression jusqu'à ce que les surfaces d'étanchéité du joint d'étanchéité axial (19) soient adjacentes l'une à l'autre.

2. Pompe centrifuge selon la revendication 1, **caractérisée en ce que** la chambre (18) est reliée, sur un côté du joint d'étanchéité axial (19), par un canal à un côté aspiration d'un étage de pompe (6), de préférence du deuxième étage de pompe (6).

3. Pompe centrifuge selon la revendication 1 ou 2, **caractérisée en ce que** la chambre (18) est reliée, sur l'autre côté de la bague d'arbre (22), par un canal à un côté aspiration d'un étage de pompe (6), de préférence du deuxième étage de pompe (6).

4. Pompe centrifuge selon l'une des revendications précédentes, **caractérisée en ce que** le joint d'étanchéité axial (19) est disposé du côté de la bague d'arbre (22) en regard des turbines (13).

5. Pompe centrifuge selon l'une des revendications précédentes, **caractérisée en ce que** la chambre (18) comprend un segment de paroi intérieure cylindrique (33) destiné à assurer un étanchement radial, est reliée hydrauliquement par un côté à la chambre de pression (17) du dernier étage de pompe (6) et comprend de l'autre côté un passage d'arbre vers l'extérieur du carter de pompe.

6. Pompe centrifuge selon la revendication 5, **caractérisée en ce que** le passage d'arbre vers l'extérieur du carter de pompe comprend une unité d'étanchéité (21), de préférence une unité d'étanchéité à anneau de glissement (21), qui est intégrée dans une paroi de face de la chambre (18).

7. Pompe centrifuge selon l'une des revendications précédentes, **caractérisée en ce que** le carter de pompe comprend une partie tête (5) et une partie socle (2) entre lesquelles les étages de pompe (6) sont fixées et **en ce que** la chambre (18) est disposée dans la partie tête (5).

8. Pompe centrifuge selon la revendication 7, **caractérisée en ce qu'**il s'agit de préférence d'une pompe en ligne entraînée par un arbre (12) vertical, dont le raccord aspiration et le raccord pression (3, 4) sont disposés du côté de la partie socle et dans laquelle est formé un canal annulaire (8), entourant les étages de pompe (6), qui fait retourner le liquide à pomper d'une chambre de pression (17), à la sortie du dernier étage de pompe (6), de la partie tête (5) dans la partie socle (2) vers le raccord pression (4), la chambre (18) étant adjacente à la chambre de pression (17) par un de ses côtés.

9. Pompe centrifuge selon l'une des revendications précédentes, **caractérisée en ce que** la bague d'arbre (22) comprend sur un côté axial une surface annulaire qui forme une surface d'étanchéité rotative du joint d'étanchéité axial (19).

10. Pompe centrifuge selon l'une des revendications précédentes, **caractérisée en ce que** la bague d'étanchéité (22) est pourvue d'une bague d'étanchéité axiale (23) de préférence échangeable dont un côté frontal forme une surface d'étanchéité rotative du joint d'étanchéité axial (19).

11. Pompe centrifuge selon l'une des revendications précédentes, **caractérisée en ce que** la contre-bague (24) comprend un côté axial qui forme une surface d'étanchéité non rotative du joint d'étanchéité (19).

12. Pompe centrifuge selon l'une des revendications précédentes, **caractérisée en ce que** la contre-bague (24) est munie d'une bague d'étanchéité axiale, de préférence échangeable, dont un côté frontal forme une surface d'étanchéité non rotative du joint d'étanchéité (19).

13. Pompe centrifuge selon l'une des revendications précédentes, **caractérisée en ce qu'**un anneau torique (35) est inséré entre la contre-bague (24) et la chambre (18), de préférence dans une rainure (34) périphérique dans la paroi de la chambre.
